# EUROPEAN PATENT APPLICATION

(11) **EP 0 950 879 A1**
(43) Date of publication of application: **20.10.1999**
(21) Application number: 99302811.7
(22) Date of filing: 12.04.1999
(51) Int. Cl.: G01F 23/296

(54) **Apparatus for sensing the level of contents in a container**

(30) Priority: 14.04.1998 GB 9807910
(71) Applicant: Klinger Fluid Instrumentation Limited, Kent DA14 5AG (GB)
(72) Inventor: Jackson, Ralph, Erith, Kent DA8 1JX (GB); Broterwood, Ian, Wilmington, Dartford, Kent DA1 1PS (GB)
(74) Representative: Carter, Stephen John

(57) **Abstract**

The invention provides apparatus for sensing the level of contents in a container comprising a body (20); a diaphragm (50) having first and second faces; two probes (40) connected to the first face of the diaphragm for mechanical oscillation thereon; two actuating arms (54,56) fixed to the second face of the diaphragm each in a position opposite that at which a respective probe is fixed; and a stack (70) comprising one or more driving transducer and/or one or more receiving transducer, the stack functioning such that the or each receiving transducer generates a voltage in response to a change in compressive force between ends of the stack and such that a voltage applied to the or each driving transducer causes the length of the stack between its ends to change. Ends of the stack (70) are connected to the actuating arms (54,56), and are subject to a compressive force. Vibration of the probes (40) causes consequential vibration of the actuating arms (54,56) to cause modulation of the compressive force applied to the stack (70).

## Description

The present invention relates to apparatus for sensing the level of contents in a container.

There is known from disclosures such as EP-A-0444173 a type of apparatus for sensing the level of contents in a container in which a probe is energised into vibration by a piezoelectric driving crystal, and vibrations in the probe are monitored by a receiving crystal. The crystals are separated from the probe by a diaphragm. The apparatus is disposed for use such that the probe projects into a container. The level of contents in the container can be determined because the vibration of the probe, and hence the signal generated by the receiving crystal, changes in dependance on whether the probe is submerged within or is clear of the contents of the container. Apparatus of this type is suitable for use with solid particular or liquid contents.

A particular technical difficulty associated with apparatus of this type arises from the need to mechanically couple the crystals to the probe such that vibration of the driving crystal is efficiently transmitted to the probe, and such that vibration in the probe is transmitted efficiently to the receiving crystal. It is an aim of the present invention to provide apparatus for sensing the level of contents in a container of the type described in the last-preceding paragraph in which transmission of vibration between the probe and the crystals is achieved in an efficient manner.

One particular problem with prior art arrangements, for example as illustrated in GB-A-2150292 has been identified by the present applicant. It is that the crystals are supported on the diaphragm such that vibration of the probe can cause the crystal stack to vibrate bodily. This is not desirable because bodily movement does not contribute to generation of an output signal. To generate a signal, the crystals must be subject to a compressive force of variable magnitude.

It has also been realised by the applicants that a potential source of inefficiency in apparatus such as this arise from the manner in which oscillation of the probes is converted into modulation of compression within the crystal stack. In the prior art, such conversion relies upon transverse oscillation of the probe being converted into linear oscillation in the stack through the mechanism of flexure of the diaphragm giving rise to linear movement of the central region of the diaphragm. It is proposed that a further increase in effectiveness of transmission of vibration between the probe and the crystal stack may be obtainable if the need for this conversion were avoided.

According to a first aspect of the invention there is provided apparatus for sensing the level of contents in a container comprising:
a body;
a diaphragm having first and second faces;
a probe connected to the first face of the diaphragm for mechanical oscillation thereon;
an actuating arm fixed to the second face of the diaphragm in a position opposite that at which the probe is fixed;
a stack comprising one or more driving and/or receiving transducer, the stack functioning such that the or each receiving transducer generates a voltage in response to a change in compressive force between ends of the stack and such that a voltage applied to the or each driving transducer causes the length of the stack between its ends to change;
a first end of the stack being connected to the actuating arm; and
a second end of the stack being connected to a force reaction member, thereby to place the crystal stack under a compressive force between the arm and the force reaction member,
whereby vibration of the probe causes consequential vibration of the actuating arm to cause modulation of the compressive force applied to the stack.

By arranging the actuating arm opposite the probe, vibration of the probe can be transmitted directly to the arm, which in turn can transmit vibration directly to the crystal stack, thereby minimising opportunities for mechanical loss to occur.

There may be provided one stack which comprises both driving and receiving transducers. Alternatively, the driving and the receiving transducers may be provided in separate stacks.

The or each stack can be used to even greater effect if two probes are provided disposed symmetrically on the diaphragm to oscillate in anti-phase. In such an arrangement, an actuating arm is provided for each probe, such that each arm effectively acts as the reaction member for the other arm.

As such, a second aspect of the invention provides apparatus for sensing the level of contents in a container comprising:
a body;
a diaphragm having first and second faces;
two probes connected to the first face of the diaphragm for mechanical oscillation thereon;
two actuating arms fixed to the second face of the diaphragm each in a position opposite that at which a respective probe is fixed;
a stack comprising one or more driving transducer and/or one or more receiving transducer, the stack functioning such that the or each receiving transducer generates a voltage in response to a change in compressive force between ends of the stack and such that a voltage applied to the or each driving transducer causes the length of the stack between its ends to change;
each of first and second ends of the stack being connected to a respective one of the actuating arms, and the stack being subject to a compressive force between said ends; and
whereby vibration of the probes causes consequential vibration of the actuating arms to cause modulation of the compressive force applied to the stack.

In general, a stack will have an optimum axis along which the driving transducer causes a change in length of the stack and on which forces applied to the stack have the greatest effect on the output voltage of the receiving transducer. In embodiments of the first and second aspects of the invention, the stack is typically disposed to have its optimum axis generally parallel to the diaphragm.

The transducers used in either aspect of the invention may comprise crystals formed from piezoelectric material, bodies of magnetostrictive material, multi-layered configurations, or combinations of any of the above, and/or other materials.

Embodiments of the invention will now be described in detail, by way of example, and with reference to the accompanying drawings, in which:
Figure 1 is a cross-sectional view of apparatus for sensing the level of contents in a container being a first embodiment of the invention;
Figure 2 is an enlarged view of a transducer assembly and other components of the apparatus of figure 1;
Figure 3 is a cross-sectional view of the transducer assembly of the embodiments of Figures 1 and 2;
Figure 4 is a sketch diagram of the movement of the probes and the diaphragm in the embodiments of Figures 1 to 3;
Figure 5 shows, somewhat diagrammatically, operative components of apparatus being a second embodiment of the invention;
Figure 6 shows, somewhat diagrammatically, operative components of apparatus being a third embodiment of the invention;
Figure 7 shows an alternative arrangement of the embodiment of Figure 5;
Figure 8 shows, somewhat diagrammatically, a further alternative of the embodiments of Figures 5 and 7; and
Figures 9 and 10 show, somewhat diagrammatically, operative components of two arrangements of apparatus being a fourth embodiment of the invention.

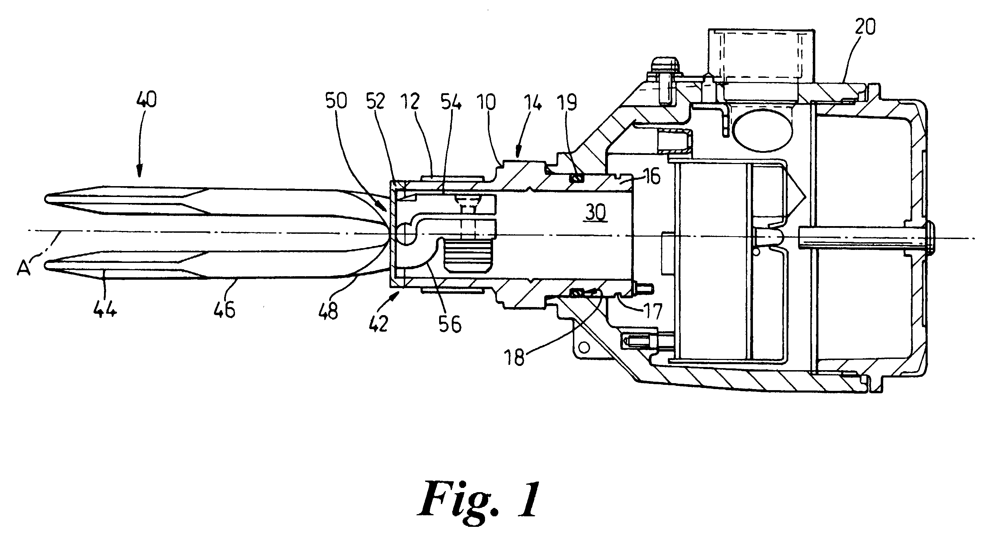

With reference first to figure 1, apparatus for sensing the level of contents in a container embodying the invention comprises a body 10. The body 10 is generally cylindrical, and symmetrical about an axis A. A threaded region 12 is provided on an outer surface of the body 10 whereby the body 10 can be secured within a suitably-threaded aperture in a wall of a container. When the body 10 is thus secured, a portion of it (referred to as inner end portion) projects within the container, and a portion of it (referred to as the outer end portion) projects out from the container. As illustrated in Figure 1, the outer end portion is disposed towards the right of the drawing.

A first part of the outer end region at 14, next to the threaded region 12 is shaped (in this embodiment with outwardly directed flats) whereby the body 10 can be gripped by a tool, such as a spanner, to enable the body 10 to be rotated in order to tighten its threaded region 12 within an aperture.

A cylindrical part 16 of the outer end region is disposed outwardly of its first part, and has a first groove 18 formed in it within which a sealing element, such as an O-ring 19, can be located and a second groove 17 within which a retaining element, such as a circlip can be retained. An enclosure 20 is carried on the body 10, the enclosure having an aperture in which the cylindrical part 16 of the outer end region is received and retained by a retaining element in the second groove 17. A seal is formed between the cylindrical part 16 and the aperture by the O-ring 19. The purpose of the enclosure 20 is to provide a suitable environment within which electronic circuitry required to control the apparatus may be contained. Alternatively, the cylindrical part 16 and the aperture may be threaded for engagement with one another.

Within the body 10 there is an axially-extending void 30 of circular cross-section which is open at the outer end.

The apparatus further includes a fork assembly. The fork assembly comprises a pair of probes 40 formed integrally with an end closure 42 of the body 10.

Each probe 40 is an elongate component which, in use, projects into the container. In this embodiments, the probes 40 are made of metal, but they might alternatively be formed of other suitable materials including plastics or ceramic materials.

An inner end portion 44 of each probe 40 is relatively flat and broad. The inner end portion 44 projects from a relatively narrower shank portion 46. The shank portion 46 in turn projects from an attachment portion 48, the attachment portion 48 being of substantially the same width as the inner end portion 44. The probes 40 are disposed such that they taper gradually away from one another, spaced from one another, symmetrically about the axis A. Their respective inner end portions 44 face one another.

The end closure 42 is formed of a suitable material, in this embodiment of metal, in one piece. The end closure 42 comprises a transverse diaphragm 50 which is circular in shape and extends transversely of the axis of the body 10. The probes 40 are fixed to or are an integral part of the diaphragm 50. A flange 52 projects from the circumference of the diaphragm 50 in an direction parallel to the axis A. Each probe 40 is formed integrally with the diaphragm, for example, in a one-piece casting, so as to project in a direction opposite to the flange 52.

Two actuating arms 54,56 project from the diaphragm 50. The actuating arms are formed integrally with the end closure. Each actuating arm is disposed on the diaphragm 50 such that it is immediately opposite a respective one of the probes 40. The actuating arms 54,56 will be described in greater detail below.

The end closure 42 is secured to the body 10 by a circumferential weld formed between the flange 52 and the body 10. The weld is formed so as to create a fluid-tight seal between the body 10 and the end closure 42.

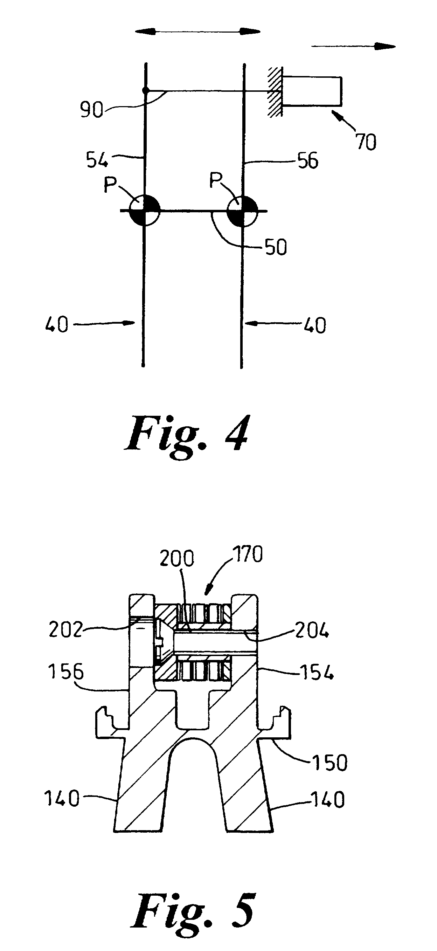

The diaphragm 50 has resilience to enable the probes to vibrate in a resonant manner, towards and away from one another, much like a tuning fork. During such vibration, the diaphragm 50 flexes, such that a central part of it oscillates substantially linearly along the axis A, and such that the actuating arms 54,56 oscillate towards and away from one another. As will be understood that actuating arms 54,56 and the probes 40 are closely mechanically coupled to one another. A large amount of vibrational energy can therefore be transferred from the probes 40 to the actuating arms 54,56. This oscillation is shown diagrammatically in Figure 4.

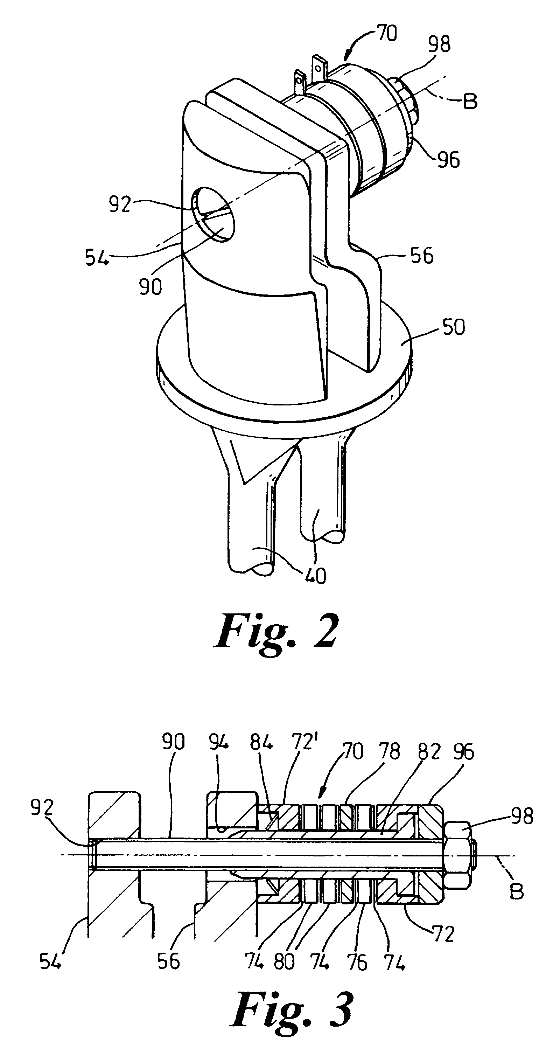

Figure 2 shows the diaphragm 50, actuating arms 54,56 and a transducer assembly of the embodiment of Figure 1. In this figure, the body has been omitted in the interest of clarity. Figure 3 shows in greater detail, and in cross section, the arrangement of the transducer assembly in this embodiment.

The transducer assembly comprises a stack 70 comprising a plurality of annular components arranged on a supporting sleeve 82 in alignment along an axis B. The sleeve 82 has a hollow cylindrical shank portion and a head portion of larger diameter; it is made of an insulating material.

The components of the stack (all of which are generally annular) are arranged on the sleeve 82 as follows:
1: a brass support 72 which has a bore of stepped diameter. The head of the sleeve is received into a larger diameter region of the bore.
2: an electrode 74.
3: a receiving crystal 76.
4: an electrode 74.
5: an insulator 78.
6: an electrode 74.
7: a driving crystal 80.
8: an electrode 74.
9: a driving crystal 80.
10: an electrode 74.
11: a brass support 72'.
12: a spring clip 84 located into the larger diameter region of the bore of the brass support to grip the shank portion of the sleeve 82 and maintain the above-mentioned components of the stack 70 in light compression against the head of the sleeve.

It will be readily understood that each of these components could be formed from a wide variety of materials and configurations.

The outer diameter of the shank is selected so as to be a close fit within the bores of the components, thereby ensuring that all of the components are maintained in a substantially coaxial arrangement.

An end of the shank portion projects from the stack 70. A short end portion of the outer diameter of the shank may be tapered to facilitate assembly of components onto it.

Each electrode is in electrical communication with the crystal or crystals next to it within the stack 70. Connections (not shown) are made to the electrodes 74 whereby an alternating voltage may be applied to the driving crystal 74 and voltages may be derived from the receiving crystals 80.

The transducer assembly further comprises a length of threaded stud 90. A first end of the threaded stud 90 is secured in a threaded bore 92 in a first one of the actuating arms 54. A thread locking compound is applied within the bore 92 to prevent loosening of the stud 90. The stud 90 extends along the axis B, through a bore 94 in a second one of the actuating arms 56, this bore 94 being of sufficiently large diameter that it does not make contact with the stud 90.

The stack 70 is carried on the stud, with the end of the shank portion projecting a short way into the bore 94. Its brass support 72 abuts the second actuating arm 56. The stack 70 is then secured under compression by a washer 96 and a nut 98 applied to the free end of the stud 90.

Once assembled as described, the stud 90 is under tension such that the diaphragm 50 adopts a convex shape, being curved away from the outer end of the body 10. The stack 70 is clamped in compression between the nut 98 and the end wall 32 of the body 10. The diaphragm 50 must be made sufficiently stiff as to resiliently resist distortion by the forces which this pre-load creates within the diaphragm 50.

In this embodiment, a second actuating arm 56 has a first section which projects normally from the diaphragm 50, an intermediate section which is displaced radially towards the first actuating arm 54, and a third section (through which the bore 94 is formed) which extends normally from the diaphragm 50. Thus, the second actuating arm 56 has a stepped configuration. By this arrangement, part of the stack 70 can be accommodated within the step of the actuating arm 56 such that the amount by which is projects radially beyond the periphery of the diaphragm 50 is minimised or, more preferably, such that the stack 70 is disposed within the periphery of the diaphragm 50.

The first actuating arm 54 may be formed so as to have a portion (within which the threaded bore 92 is formed)remote from the diaphragm 50 which is of a thickness less than a portion adjacent the diaphragm 50. This permits a greater offset to be formed in the second actuating arm 56 than would be the case if the first actuating arm 54 were straight.

The above-described arrangement is such that vibrational movement of the diaphragm 50 caused by the probes 40 is transmitted to the actuating arms 54,56. The actuating arms 54,56 are formed to be sufficiently rigidly to minimise flexing and thereby to transmit vibration along their length with as little energy loss as possible. It will be understood that the effect of this arrangement is to transmit vibrational energy from the probes 40 through the actuating arms 54,56 into the stack 70. Energy is transmitted directly through the diaphragm 50, thereby minimising the amount of energy lost. The actuating arms 54,56 and the probes 40 can be considered to be rigid elongate bodies carried to pivot about pivot points P within the diaphragm 50, as illustrated in Figure 4.

A further embodiment of the invention is shown in Figure 5. As with the first embodiment, actuating arms 154, 156 are provided which transmit vibration forces from a pair of probes 140. Each actuating arm 154,156 is stepped, whereby there is a greater distance between them remote from the diaphragm than there is adjacent the diaphragm.

In this embodiment, a stack 170 is disposed in compression between the actuating arms 140. The stack 170 is connected to a first of the actuating arms 154 by a bolt 200. The bolt 200 passes through the stack 170 and through a threaded bore 204 in the first actuating arm 154 within which it is secured by application of a thread locking compound. A bore 202 is also provided in the second actuating arm 156 through which a head of the bolt 200 can be reached. It should be noted that the bolt 200 does not connect the stack 170 to the second actuating arm 156, the bore 202 being wide enough such that the head of the bolt can pas clearly through it.

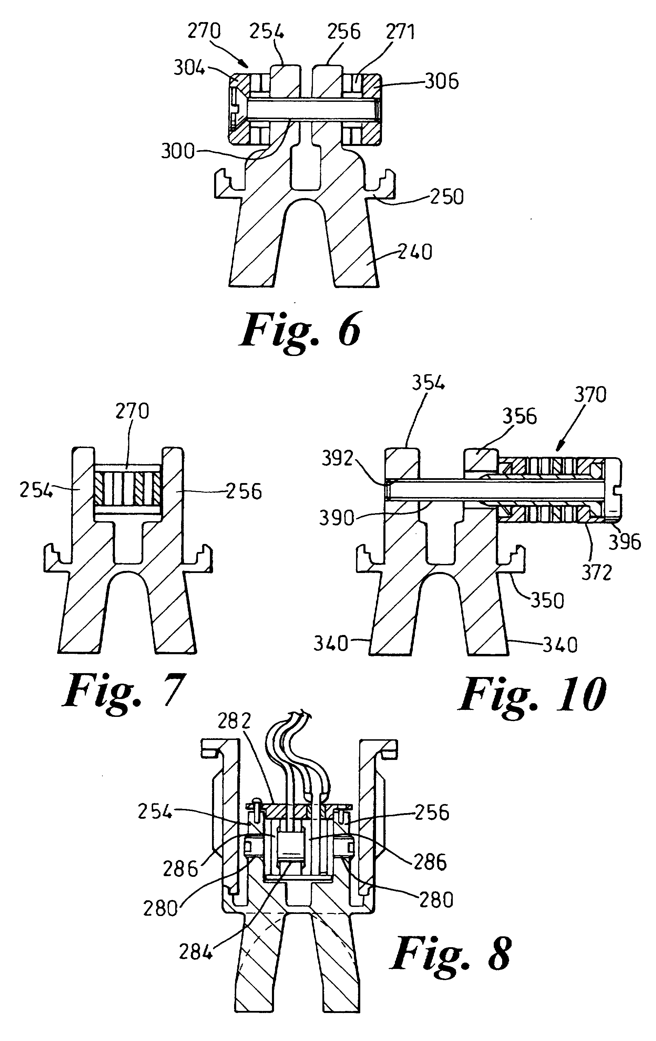

With reference now to Figure 6, a further alternative embodiment comprises a diaphragm 250, probes 240 and actuating arms 254,256, disposed most generally as in the last-preceding embodiment, with the modification that each actuating arm 254,256 is stepped, whereby there is a lesser distance between them remote from the diaphragm than there is adjacent the diaphragm.

In this embodiment, two stacks 270, 271 are provided. These are each clamped to a respective one of the actuating arms 254,256, and each extends axially away from the other with its axis generally parallel to the diaphragm 250. A bolt 300 extends through both of the stacks 270,271 and through bores in both of the actuating arms 254,256. A head of the bolt 300 is disposed in a countersunk recess in a washer 304 to apply force evenly across an end surface of one of the stacks 270. A nut 306 applied to the bolt 300 applies force evenly across an end surface of the other of the stacks 271. Thread locking compound is applied to prevent the nut becoming separated from the bolt. By tightening the nut, the bolt 300 is placed under tension. This causes each of the two stacks 270,271 to be compressed against the corresponding actuating arm 254,256.

In one possible arrangement, one of the stacks 270 comprises driving transducers only while the other stack 271 comprises receiving transducers only. Alternatively, each stack 270,271 may comprise both types of transducer.

Many variations on these embodiments are possible within the scope of the invention. For example, the embodiment of Figure 5 could be modified as shown in Figure 7. In this modification, the stack 270 is retained in place between the actuating arms 254, 256 principally by the clamping action which occurs as the stack 270 is loaded in compression by the actuating arms 254,256. Optionally, retention of the stack 270 can be enhanced by bonding it to the actuating arms 254,256 and/or by providing some other means extending through the arms 254,256 to engage the stack, for example set screws 280 seen in Figure 8, which can be tightened to pre-load the stack 270.

The arrangement of Figure 8 also includes a stack housing shoe 282 which is pinned to at least one of the actuating arms above the stack 270 to protect the stack and help to retain it in place. The Figure also shows an example of a stack including a piezo electric ceramic multi-layer actuator (MLA) 284 in place of the driving crystal of the other arrangements described. The MLA 284 is held in place in the stack between two retaining pads 286.

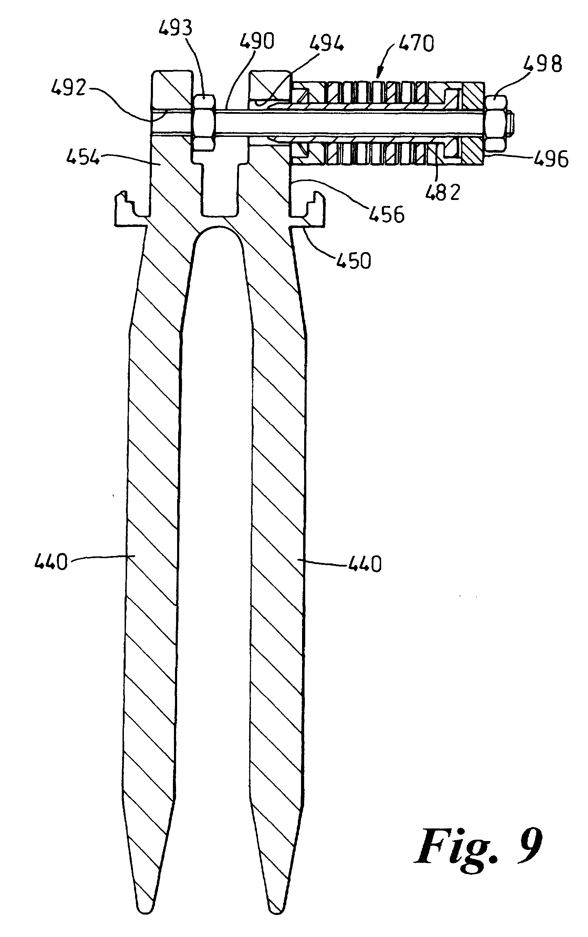

Figures 9 and 10 show two further arrangements. These are broadly similar to the embodiment of Figure 1, but it will be seen that the actuating arms 354,356 are arranged symmetrically about the diaphragm 350, and are not offset as are the actuating arms of the embodiment of Figure 1.

Subject to the modification described in the last-preceding paragraph, the embodiment of Figure 9 is similar to the embodiment of Figure 1. In this embodiment, a locking nut 493 is threaded onto the stud 490 between the actuating arms 454,456. The locking nut 493 is positioned to abut the first actuating arm 454 to resist unscrewing movement of the stud 490 and to enhance mechanical coupling between the stud 490 and the actuating arm 454 thereby increasing the amount of vibrational energy transferred from the actuating arm 454 to the stud 490.

In the embodiment of Figure 10, the stack 370 is secured by a bolt 390. The head 396 of the bolt 390 engages a brass support 372 of the stack 370. The shaft of the bolt 390 passes through the stack 370 and through the second actuating arm 356 such that an end portion of it is retained in a threaded bore 392 in the first actuating arm 354.

It will be readily understood that features of various embodiments described above can be combined in many alternative configurations to produce further embodiments of the invention.

The stack, in many embodiments of the invention, could comprise transducers other than piezoelectric crystals. For example, in any of the above embodiments, one or more annular multi-layered configurations could replace any or all crystals in a stack. Alternatively, one or more body of a magnetostrictive metal alloy, such as Terfenol-D (r.t.m) could be used in place of any or all crystals in a stack.

## Claims

1. Apparatus for sensing the level of contents in a container comprising:
a body;
a diaphragm having first and second faces;
a probe connected to the first face of the diaphragm for mechanical oscillation thereon;
an actuating arm fixed to the second face of the diaphragm in a position opposite that at which the probe is fixed;
a stack comprising one or more driving and/or receiving transducer, the stack functioning such that the or each receiving transducer generates a voltage in response to a change in compressive force between ends of the stack and such that a voltage applied to the or each driving transducer causes the length of the stack between its ends to change;
a first end of the stack being connected to the actuating arm; and
a second end of the stack being connected to a force reaction member, thereby to place the crystal stack under a compressive force between the arm and the force reaction member,
whereby vibration of the probe causes consequential vibration of the actuating arm to cause modulation of the compressive force applied to the stack.

2. Apparatus for sensing the level of contents in a container comprising:
a body;
a diaphragm having first and second faces;
two probes connected to the first face of the diaphragm for mechanical oscillation thereon;
two actuating arms fixed to the second face of the diaphragm each in a position opposite that at which a respective probe is fixed;
a stack comprising one or more driving transducer and/or one or more receiving transducer, the stack functioning such that the or each receiving transducer generates a voltage in response to a change in compressive force between ends of the stack and such that a voltage applied to the or each driving transducer causes the length of the stack between its ends to change;
each of first and second ends of the stack being connected to a respective one of the actuating arms, and the stack being subject to a compressive force between said ends; and
whereby vibration of the probes causes consequential vibration of the actuating arms to cause modulation of the compressive force applied to the stack.

3. Apparatus according to claim 1 or 2, wherein the stack comprises both driving and receiving transducers.

4. Apparatus according to claim 1 or 2, wherein the driving and the receiving transducers may be provided in separate stacks.

5. Apparatus according to any one of the preceding claims wherein the stack is disposed with its optimum axis, along which the driving transducer causes a change in length of the stack and on which forces applied to the stack have the greatest effect on the output voltage of the receiving transducer, generally parallel to the diaphragm.

6. An apparatus according to any one of the preceding claims, wherein the or each probe and the or each actuating arm are formed integrally with the diaphragm.

7. An apparatus according to any one of the preceding claims, wherein the stack does not project beyond the periphery of the diaphragm.

8. An apparatus according to any one of the preceding claims, wherein the stack is disposed between the two actuating arms or the actuating arm and the force reaction member as the case may be.
